# EUROPEAN PATENT APPLICATION

(11) **EP 1 318 046 A2**
(43) Date of publication of application: **11.06.2003**
(21) Application number: 02079417.8
(22) Date of filing: 23.10.2002
(51) Int. Cl.: B60P 1/44

(54) **Device for suspending a loading platform at a vehicle**

(30) Priority: 13.11.2001 IE 20010982
(71) Applicant: Hydrotec Engineering Ltd., Clonmel, Country Tipperary (IE)
(72) Inventor: Dhollander, Jan Prudence Jozef, 9111 Sint-Niklaas (BE); Dhollander, Nancy Alois, 9111 Sint-Niklaas (BE)
(74) Representative: Donné, Eddy

(57) **Abstract**

Device for suspending a loading platform at a vehicle, of the type which at least consists of, on one hand, a support construction (4) to which the loading platform (2) is attached, and, on the other hand, a coupling device (5) forming a connection between the support construction (4) and the vehicle (3), characterized in that the coupling device (5) comprises support means (12) which allow to suspend the support construction (4), possibly together with the loading platform (2), at the vehicle (3) exclusively by means of hooking-up and/or putting-on.

## Description

This invention relates to a device for suspending a loading platform at a vehicle, more particularly at a truck.

It is known that such loading platforms can be attached to a vehicle, more particularly the chassis thereof, by means of a support construction, which mostly consists of pivotable arms and/or hydraulic cylinders fixed in a hinged manner.

Traditionally, the attachment is performed by means of suspension flanges which, at one hand, are attached at the frame of the vehicle and, at the other hand, are connected to the support construction.

For attachment, welding connections can be used, however, more recently also bolt connections are used, which offers the advantage that the mounting and finishing time at the installers' of the loading board are restricted to a minimum.

However, the known systems still show various disadvantages. During attachment, it is often difficult to provide the support construction in the correct position under the vehicle before attaching this construction. Furthermore, it is often difficult to fix the whole, formed by the loading platform and the support construction, in the correct position, as the known embodiments with bolt connections only allow for adjustments to a limited extent.

The present invention aims at a device for suspending a loading platform at a vehicle, whereby one or more of said disadvantages are excluded.

To this aim, the invention, according to a first aspect, consists in a device for suspending a loading platform at a vehicle, of the type consisting at least of, on one hand, a support construction, to which the loading platform is attached, and, on the other hand, a coupling device forming a connection between the support construction and the vehicle, with as a characteristic that the coupling device comprises support means which allow to suspend the support construction, possibly together with the loading platform, at the vehicle exclusively by being hooked up and/or put on. As a consequence thereof, the advantage is obtained that the loading platform already can be suspended at the frame of the vehicle, without being fixedly connected thereto, after which it can be positioned and attached.

Apart thereof, the coupling device preferably also comprises attachment means, such as bolts or the like, for attaching the support construction fixedly to the vehicle, after said support construction has been suspended at the vehicle by means of the support means. It is noted that, as the whole is designed such that the loading board first can be suspended and subsequently can be fixed, a mechanically stronger embodiment is obtained, as the load is taken from the attachment means themselves, for example, bolts applied as such attachment means.

In a practical form of embodiment, the support means comprise at least two pairs of supporting parts, the supporting parts of which can be presented to each other at an angle and, by means of a turning movement of the support construction, can be brought into contact with each other. By doing so, it is possible to easily hook the loading platform up to the vehicle.

According to an alternative, the hooking-up or putting-on also can be performed by means of a shifting movement or the combination of a shifting movement and a turning movement.

According to a second aspect, the invention provides for a device for suspending a loading platform at a vehicle, of the type which at least consists of, on one hand, a support construction to which the loading platform is attached, whereby this support construction comprises a transverse-directed frame, more particularly a transverse beam, and, on the other hand, a coupling device forming a connection between the support construction and the vehicle, with as a characteristic that the coupling device at least consists of first suspension elements which are attached to the undercarriage of the vehicle, second suspension elements in the form of suspension plates which are provided at the transverse-directed frame and can cooperate with the first suspension elements, as well as attachment means which form a connection between the first and second suspension elements, and that the coupling device also comprises means for altering the position of the support construction and the loading platform and/or taking up mounting tolerances by means of a mutual positioning between the first suspension elements and the second suspension elements. As a result thereof, as will be explained hereafter in the detailed description, a very precise positioning of the loading board is enabled.

With the intention of better showing the characteristics of the invention, hereafter, as an example without any limitative character, a preferred form of embodiment is described, wherein:
Figure 1 in perspective represents a device according to the invention;
figure 2 represents a view according to arrow F2 in figure 1;
figure 3 in perspective represents the suspension element indicated by arrow F3 in figure 2;
figure 4 in perspective represents the suspension element indicated by arrow F4 in figure 2;
figure 5 represents a cross-section according to line V-V in figure 4;
figures 6 and 7 represent views analogous to that of figure 2, however, at different moments during the mounting of the loading platform concerned.

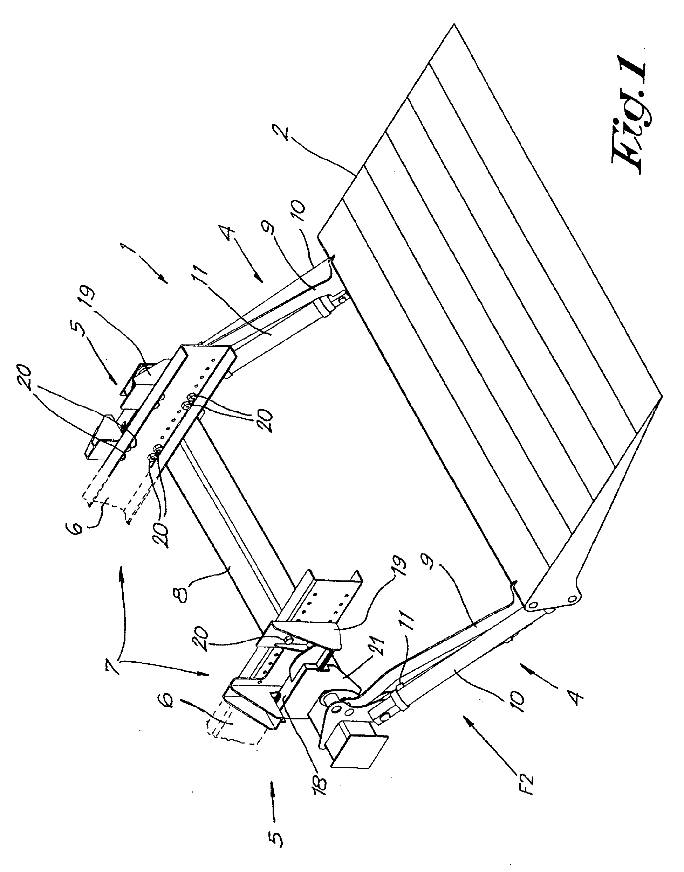

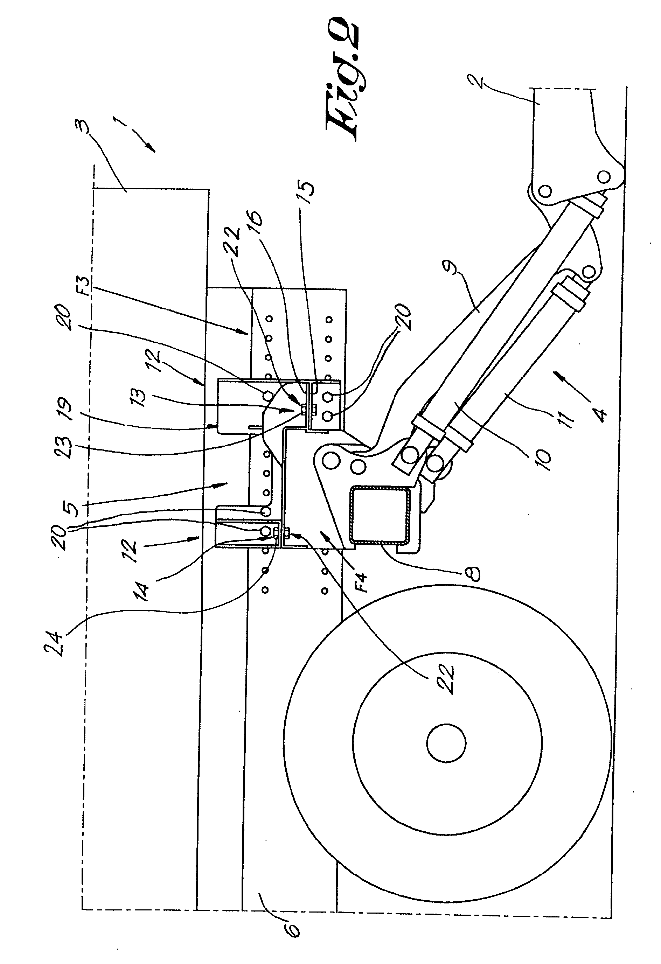

As represented in figures 1 and 2, the invention relates to the device 1 for suspending a loading platform 2 at a vehicle 3.

The device 1 comprises, on one hand, a support construction 4 to which the loading platform 2 is attached, and, on the other hand, a coupling device 5 forming a connection between the support construction 4 and the vehicle 3, more particularly the longitudinal beams 6 of the undercarriage 7 thereof.

The support construction 4 substantially is composed of a transverse-directed frame formed by a transverse beam 8 and pivotable arms 9, as well as various pressure cylinders 10-11, which also serve as pivotable arms and at which the loading platform 2 is fixed.

A first aspect of the invention consists in that the coupling device 5 comprises support means 12 which allow to suspend the support construction 4, preferably together with the loading platform 2, at the vehicle 3, exclusively by means of hooking-up and/or putting-on. In the represented example, these support means 12, which are situated at opposite sides of the undercarriage 7, each consist of two respective pairs of supporting parts, a first pair consisting of a first supporting part 15 which is connected to the vehicle 3, and a second supporting part 16 which is connected to the support construction 4, whereby the second supporting part 16 can rest on top of the first supporting part 15, and a second pair, respectively, consisting of a first supporting part 17, which is connected to the vehicle 3, and a second supporting part 18 which is connected to the support construction 4, whereby the second supporting part 18 can cooperate with the underside of the first supporting part 17. Moreover, these pairs of supporting parts are arranged such that, according to the longitudinal direction of the loading platform 2, the first pair of supporting parts 15-16 is situated closest to the loading platform 2. As will be explained in the following, such support means allow to present the support construction 4 with one extremity below the vehicle 3, after which, by means of a turning movement, the respective supporting parts 15-16 and 17-18 can be brought together.

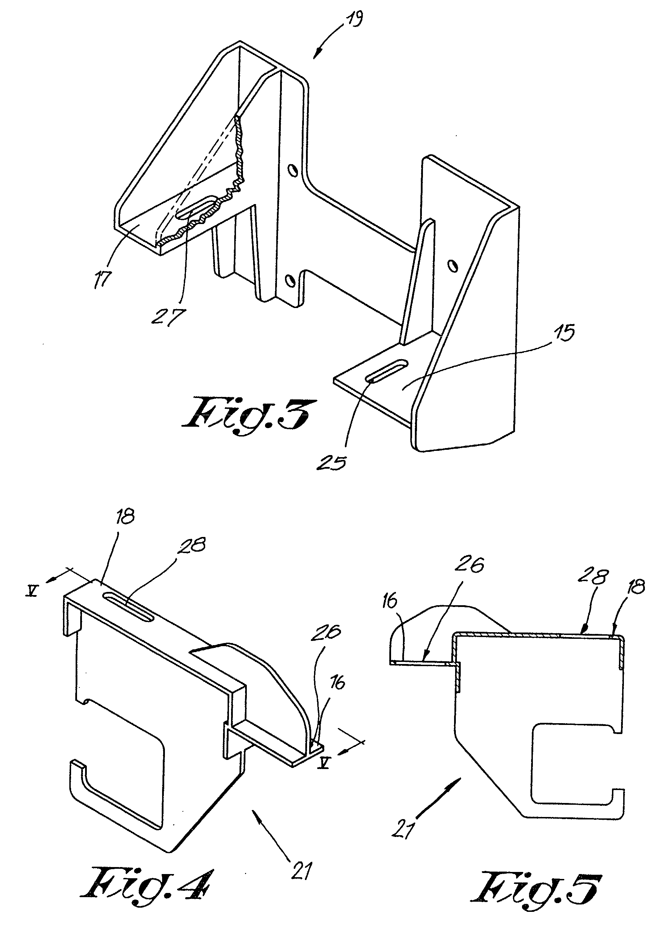

As can be seen to greater detail in figure 3, the supporting parts 15 and 17 preferably consist of support flanges which form part of a suspension element 19, more particularly a suspension console, which, by means of bolts 20 or such, is fixed at the longitudinal beams 6 and/or is welded to these longitudinal beams 6.

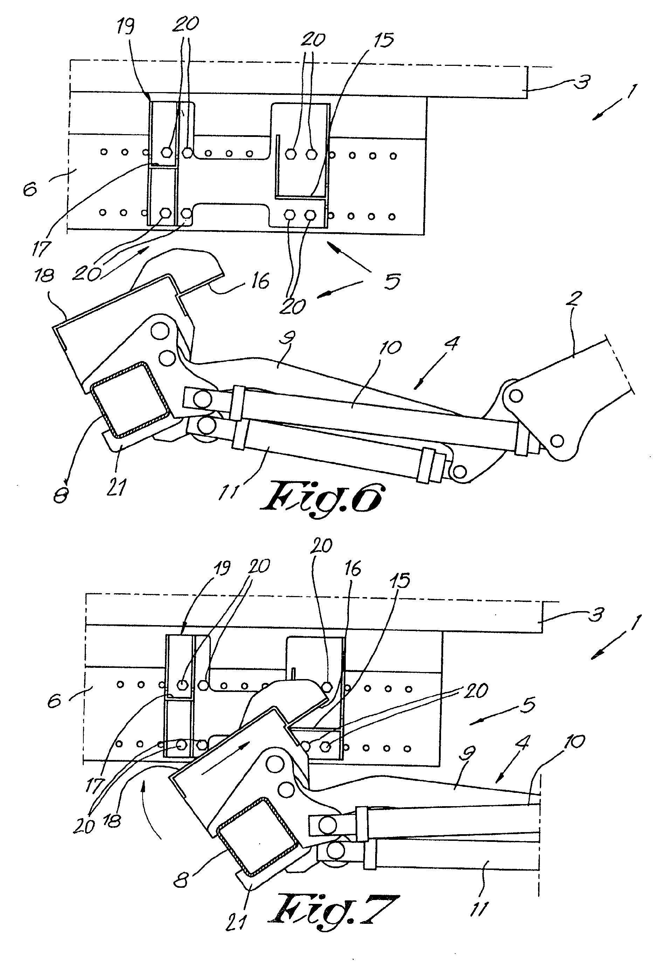

As represented in figures 4 and 5, the supporting parts 16 and 17, on the contrary, preferably consist of support flanges which form part of a suspension element 21, more particularly a suspension plate, which is provided on the transverse beam 8 in a transverse manner, preferably is welded or screwed thereon.

Apart from the support means 12, the coupling device 5 also comprises attachment means 22, in this case, bolt connections, with bolts 23 with which the supporting parts 15 and 16 are connected to each other, and with bolts 24 with which the supporting parts 17 and 18 are connected to each other.

In accordance with the second aspect of the invention, the support means 12 also are provided with means for altering the position of the support construction 4 and the loading platform 2 in respect to the undercarriage 7 and/or for taking up mounting tolerances. To this aim, said attachment means 22 are designed such that the cooperating supporting parts 15-16 and/or 17-18 can be mutually positioned according to at least the longitudinal direction and/or the transverse direction of the whole, which in the represented example is obtained in that these attachment means 22 are composed of bolts 23-24 which fit through openings 25-26 and 27-28, whereby at least a number of these openings, and preferably each of these openings, are slot-shaped and extend according to the longitudinal and/or transverse directions.

As can be seen in figures 3 and 4, respectively, preferably slot-shaped openings, extending transverse in respect to each other, will be used. In other words, the slot-shaped opening 25 extends transverse in respect to the slot-shaped opening 26, whereas the slot-shaped opening 27 extends transverse in respect to the slot-shaped opening 28.

Figures 6 and 7 represent how the loading platform 2 according to the invention can be suspended under the vehicle 3.

At opposite sides of the undercarriage 7, suspension elements 19, more particularly suspension consoles, as illustrated in figure 3, are attached to the longitudinal beams 6, such by means of said bolts 20.

As abovesaid, the suspension elements 21 are provided fixedly at the support construction 4.

By presenting now this support construction 4, as illustrated in figures 6 and 7, with its free extremity below the vehicle 3, and by hooking it, so to speak, up to the consoles by means of a turning movement, a condition is obtained as illustrated in figure 2, with the only difference that the bolts 23-24 are not yet provided.

It is noted that the support construction 4, together with the loading platform 2, after hooking-up automatically remains suspended at the suspension elements 19, after which the bolts 23 and 24 can be provided.

Before tightening the bolts 23 and 24, the position of the support construction 4 and, thus, also of the loading platform 2, easily can be adjusted by means of a mutual shifting of the supporting parts 16 and 18 against the supporting parts 15 and 17, which is possible due to the fact that the openings 25 to 28 are made slot-shaped.

Of course, these slot-shaped openings also allow for turning the support construction 4 somewhat, together with the loading platform 2, when this is necessary for an accurate positioning of the loading platform 2 in respect to the loading floor and/or the loading space of the vehicle 3.

As the support construction 4 and the loading platform 2 can be suspended first and already be released from being held before providing the attachment means 22, it is clear that an easy and simple mounting is enabled.

It is noted that, irrespective of the fact that the suspension elements 21 already are fixedly attached to the transverse beam 8, still a fine adjustment of the position remains possible. This possibility of a fine adjustment of the position forms a huge advantage for a smooth performance of the mounting, in the first place with larger body works where undercarriages for 7 for vehicles are built, as well as loading boards are constructed. In such case, the suspension elements 19 already can be attached to the undercarriage 7 before the whole unit is lacquered. The correct positioning of the loading board then no longer depends on the 100 % correct positioning of the suspension elements.

The present invention is in no way limited to the forms of embodiment described as an example and represented in the figures; on the contrary, such device for suspending a loading platform at a vehicle may be realized according to various variants, without leaving the scope of the invention.

## Claims

1. Device for suspending a loading platform at a vehicle, of the type which at least consists of, on one hand, a support construction (4) to which the loading platform (2) is attached, and, on the other hand, a coupling device (5) forming a connection between the support construction (4) and the vehicle (3), **characterized in that** the coupling device (5) comprises support means (12) which allow to suspend the support construction (4), possibly together with the loading platform (2), at the vehicle (3) exclusively by means of hooking-up and/or putting-on.

2. Device according to claim 1, **characterized in that** the coupling device (5) also comprises attachment means (22), such as bolts (23-24) or the like, for fixedly attaching the support construction (4) to the vehicle, after having suspended said support construction at the vehicle (3) by means of the support means (12).

3. Device according to claim 1 or 2, **characterized in that** the support means (12) comprise at least two pairs of supporting parts (13-14), the supporting parts (15-16-17-18) of which can be presented to each other at an angle and can be brought into mutual contact by means of a turning and/or shifting movement of the support construction (4).

4. Device according to claim 3, **characterized in that** the first pair of supporting parts (13) consists of a first supporting part (15) which is connected to the vehicle (3), and a second supporting part (16) which is connected to the support construction (4), whereby the second supporting part (16) can rest on top of the first supporting part (15); that the second pair of supporting parts (14) consists of a first supporting part (17) which is connected to the vehicle (3), and a second supporting part (18) which is connected to the support construction (4), whereby the second supporting part (18) can cooperate with the underside of the first supporting part (17); and that the two pairs of supporting parts (13-14) are installed one behind the other according to the longitudinal direction of the loading platform (2), whereby the first pair of supporting parts (13) is closest to the loading platform (2).

5. Device according to any of the preceding claims, **characterized in that** the support means (12), on one hand, comprise supporting parts (16-18) which are provided at the support construction (4) and, on the other hand, comprise supporting parts (15-17) which are provided at suspension consoles (19) which can cooperate with the undercarriage (7) of the vehicle (3).

6. Device according to claim 4 or 5, **characterized in that** the supporting parts (15-16-17-18) consists of support flanges cooperating with each other.

7. Device according to any of the preceding claims, **characterized in that**, at the location of said support means (12), it is provided with means for altering the position of the support construction (4) and the loading platform (2) and/or to take up mounting tolerances.

8. Device according to claim 7, **characterized in that** said means are formed by attachment means (22) consisting of bolts (23-24) which fit through openings (25-26-27-28) in the supporting parts (15-16-17-18) to be connected, i.e. parts of the aforementioned support means (12), whereby at least a number of said openings (25-26-27-28) are slot-shaped.

9. Device according to claim 8, **characterized in that** the supporting parts (15-16-17-18) to be connected can be mutually positioned according to at least the longitudinal direction and/or the transverse direction of the whole, and/or that they are turnable.

10. Device according to claim 9, **characterized in that** it comprises supporting parts (15-16-17-18) cooperating with each other, which parts are provided with slot-shaped openings (25-26-27-28) directed transverse in respect to each other.

11. Device for suspending a loading platform at a vehicle, of the type which at least consists of, on one hand, a support construction (4) to which the loading platform (2) is attached, whereby this support construction (4) comprises a transverse-directed frame, more particularly a transverse beam (8), and, on the other hand, a coupling device (5) forming a connection between the support construction (4) and the vehicle (3), **characterized in that** the coupling device (5) at least consists of first suspension elements (19) which are attached to the undercarriage of the vehicle (3), second suspension elements (21) in the form of suspension plates which are provided at the transverse-directed frame and which can cooperate with the first suspension elements (19), as well as attachment means (22) which form a connection between the first and second suspension elements (19-21), and that the coupling device (5) also comprises means for altering the position of the support construction (4) and the loading platform (2) and/or for taking up mounting tolerances by means of a mutual positioning between the first suspension elements (19) and the second suspension elements (21).

12. Device according to claim 11, **characterized in that** said means for altering the position of the support construction (4) and the loading platform (2) and/or for taking up mounting tolerances are formed by the attachment means (22), whereby these latter to this end consist of bolts (23-24) which fit through openings (25-26-27-28) in the suspension elements (19-21) to be connected, and whereby at least a number of these openings (25-26-27-28) are slot-shaped.
